# EUROPEAN PATENT APPLICATION

(11) **EP 1 316 954 A2**
(43) Date of publication of application: **04.06.2003**
(21) Application number: 02020062.2
(22) Date of filing: 06.09.2002
(51) Int. Cl.: G11B 19/02, G11B 7/00

(54) **Recording and regeneration apparatus and data erasure method for use in the recording and regeneration apparatus**

(30) Priority: 30.11.2001 JP 2001367250
(71) Applicant: Kabushiki Kaisha Toshiba, Minato-ku, Tokyo 105 (JP)
(72) Inventor: Suzuki, Noboru, 1-chome, Minato-ku, Tokyo 105-8001 (JP)
(74) Representative: Henkel, Feiler, Hänzel

(57) **Abstract**

A recording and regeneration apparatus for reliably erasing data stored on a disk medium (such as a disk drive) which does not require a particular working environment such as a host system or a medium that stores the dedicated data erasure program. The apparatus comprises a disk medium (1) on which data is recorded, a switch (13) for generating an erasure instruction designating an erasure mode, and a processor (10) for executing a program stored in a memory for erasing data recorded on the disk medium (1), if the erasure instruction is generated. The erasure instruction may also be generated in response to a command signal external to the apparatus. The processor (10) may determine whether or not the erasure instruction is generated upon application of power to the recording and regeneration apparatus.

## Description

The present invention relates to a recording and regeneration apparatus and a data erasure method for use in the recording and regeneration apparatus, and more particularly to a technique for securely erasing data from a recording and regeneration apparatus.

In general, in information processing apparatuses such as personal computers, a hard disk drive (hereinafter referred to simply as a "disk drive") is used as an external storage device. A disk drive is a device that writes to and reads from a disk medium. In recent years, small and thin-type disk drives have been developed. Thus disk drives are used as storage devices in portable electronic apparatuses such as portable computers and PDAs (Personal Digital Assistants). Disk drives are also used to record audio/visual ("AV") data in various types of Digital AV apparatuses such as, for example, digital TVs and digital VCRs.

When a conventional personal computer or a disk drive used therein is disposed of or resold, there is a danger that the data stored on the disk drive may become known to a third party.

To prevent disclosure to third parties of the data stored in a disk drive, it is necessary to execute a data erasure operation for erasing all data recorded on the disk, before the disk drive or a personal computer incorporating the disk drive is disposed of or subjected to resale. However, even if normal file delete processing is executed using the operating system, the data on the disk may still be accessible.

Therefore, in a data erasure operation, it is necessary to use a medium (a floppy disk, for example) that stores a dedicated data erasure program capable of reliably erasing all the data stored on a disk drive. As an example, a personal computer executes a dedicated data erasure program from a floppy disk, thereby erasing the data on the disk.

Thus, to reliably erase the data stored in a disk medium such as a disk drive, a particular working environment such as a host system or a medium that stores the dedicated data erasure program, is needed, which is costly.

Japanese Patent Laid-Open No. 6-150326 discloses a disk recording and regeneration device having a data erasure instruction key. If the data erasure instruction key is operated by a user while power is applied to the device, the device will erase data on the disk.

However, the device disclosed in the above-named patent may be discarded or resold with data remaining on the disk. When the device is discarded or resold, power will necessarily be removed from the device. In order to erase the remaining data on the disk, it is required that the data erasure instruction key be operated (for example, by a new owner) once power has been reapplied to the device. Therefore, there remains a danger of disclosure to third parties of the data stored on the disk.

Thus, there is a need for an apparatus and method for reliably erasing data stored on a disk medium which does not require a particular working environment such as a host system or a medium that stores a dedicated data erasure program.

In addition, there is a need for an apparatus and method for reliably and automatically erasing data stored on a disk medium once power is applied to a recording and regeneration device for operating the disk medium.

A recording and regeneration device is disclosed for reliably erasing data stored on a disk medium which does not require a particular working environment such as a host system or a medium that stores a dedicated data erasure program.

According to embodiments of the present invention, the recording and regeneration device comprises a disk medium on which data is recorded; a switching means for switching to an erasure instruction generating position for generating an erasure instruction, the erasure instruction generating position being maintained after the switching means is switched thereto; and a control means having an erasure mode for executing, in response to the erasure instruction, data erasure processing for erasing data recorded on the disk medium.

According to other embodiments of the present invention, the recording and regeneration device comprises a disk medium on which data is recorded; a control means having an erasure mode for executing, in response to an erasure instruction, data erasure processing for erasing data recorded on the disk medium; and switching means operable for switching between a first position for generating the erasure instruction and a second position for not generating the erasure instruction; wherein while the switching means is maintained in the first position, the control means remains in the erasure mode.

According to yet other embodiments of the present invention, the recording and regeneration device comprises a disk medium on which data is recorded, an on-board memory, on-board means for generating an erasure instruction and on-board control means for executing, when the erasure instruction is generated, a computer program stored in the on-board memory, the computer program providing data erasure processing to erase data recorded on the disk medium. The erasure instruction designates an erasure mode of the on-board control means.

According to one embodiment of the present invention, the on-board control means assumes one of a normal operation mode when the erasure instruction is not generated and an erasure mode when the erasure instruction is generated, the on-board control means executing, in the normal operation mode, at least one of writing of data to the disk medium and reading of data from the disk medium in accordance with a command from a host system, and the on-board control means executing, in the erasure mode, the data erasure processing. The on-board control means may determine, upon application of power to the recording and regeneration device, whether or not the erasure instruction is generated.

According to embodiments of the present invention, the on-board control means may comprise an on-board processor. The on-board processor executes, when the erasure instruction is generated, a data erasure program stored in a non-volatile on-board memory, the data erasure program for erasing data recorded on the disk medium.

According to other embodiments of the present invention, a method is disclosed for erasing data recorded on a disk medium in a recording and regeneration device. The method comprises providing on a housing of the recording and regeneration apparatus a switching means which generates an erasure instruction when the switching means is operated, providing an on-board memory and providing on-board control means for executing, when the erasure instruction is generated, a computer program stored in the on-board memory, the computer program providing data erasure processing to erase data recorded on the disk medium. According to one embodiment, the switching means may comprise a jumper switch or a jumper pin.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram illustrating the configuration of a disk drive, according to embodiments of the invention;
FIG. 2 is a view illustrating the outward appearance of the disk drive, according to embodiments of the invention; and
FIG. 3 is a flowchart for illustrating the procedure of data erasure processing executed by the disk drive, according to embodiments of the invention.

Embodiments of the invention will be described with reference to the accompanying drawings.

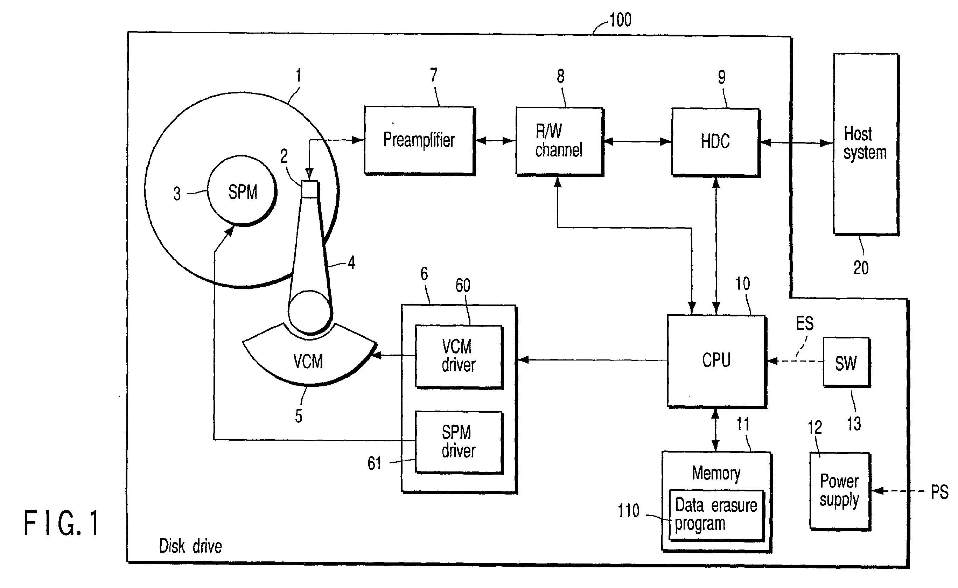

FIG. 1 is a block diagram illustrating the configuration of a disk drive according to an embodiment of the invention. A disk drive 100 is used as, for example, a storage device for a host system 20 such as a computer. In the description below, it is supposed that the disk drive 100 is a hard disk drive.

The disk drive 100 is an electromechanical device for controlling the rotation of a disk medium 1 (hereinafter referred to simply as a "disk") as a magnetic recording medium, thereby reading and writing data from and to the disk 1. The housing of the disk drive 100 comprises a base unit (not shown) on which the components of the disk drive 100 are mounted, and a top cover (not shown) joined with the base unit to form the housing of the disk drive 100. The housing houses the disk 1, a magnetic head 2, spindle motor (SPM) 3, actuator 4, voice coil motor (VCM) 5 and motor driver IC 6. Although the housing of the disk drive 100 can be designed to mount one or more disks 1, it is supposed here, for the sake of explanation, that only one disk 1 is mounted.

The disk 1 is rotatably mounted on the base unit. A surface of the disk 1 has a data region for magnetically storing data. The spindle motor (SPM) 3 is provided to drive and rotate the disk 1. When the disk drive 100 operates, the disk 1 is rotated at a predetermined speed by the spindle motor (SPM) 3.

The magnetic head 2 is mounted on the free end of the actuator 4 that is driven and rotated by the voice coil motor (VCM) 5, and reads and writes data from and to the disk 1. The actuator 4 is used to position the magnetic head 2 to a target position on the disk 1. The magnetic head 2 comprises a slider, and a write head element and read head element mounted on the slider. The write head element is used to magnetically write data to the disk 1, while the read head element is used to magnetically read data from the disk 1.

The motor driver IC 6 comprises a VCM driver 60 for supplying a driving current to the voice coil motor (VCM) 5, and an SMP driver 61 for supplying a driving current to the spindle motor (SPM) 3.

The voice coil motor (VCM) 5 is supplied with a driving current from the VCM driver 60 included in the motor drive IC 6. The motor drive IC 6 is controlled by a CPU 10.

In addition to the head and disk assembly, the housing of the disk drive 100 houses a preamplifier circuit 7, R/W channel 8, disk controller (HDC) 9, CPU 10, memory 11 and power supply circuit 12.

The preamplifier circuit 7 has a read amplifier and write amplifier. The read amplifier amplifies a read data signal output from the read head element of the magnetic head 2. The write amplifier converts a write data signal input from the R/W channel 8 into a write current signal and supplies the resultant signal to the write head of the magnetic head 2. The R/W channel 8 is a signal processing IC for processing a read/write data signal (including a servo data signal). The disk controller (HDC) 9 has an interface function for interfacing the disk drive 100 and the host system 20 (e.g., a personal computer, digital device, etc.).

The CPU 10 is a processor device for controlling the operation of the disk drive 100, and controls the servo system, normal read/write operations, and data erasure processing, etc. The memory 11 may comprise a flash memory as a non-volatile memory. The memory 11 may also comprise RAM, ROM, etc. The programs stored on-board the disk drive 100 in the memory 11 include a data erasure program 110 for executing the aforementioned data erasure processing. The data erasure program 110 may, as an example, be stored in the flash memory.

The data erasure program 110 is a program for causing the disk drive 100 itself to automatically execute a data erasure operation for erasing all data recorded on the data region of the disk 1. The CPU 10 executes the data erasure program 110. This means that the disk drive 100 itself can execute the data erasure operation for erasing all data recorded on the disk 1, without the control of the host system 20.

The power supply circuit 12 provides a power supply voltage necessary to operate each component of the disk drive 100, using externally supplied power.

Further, the housing of the disk drive 100 has a data erasure switch 13. The data erasure switch 13 is an operation switch for instructing the disk drive 100 to execute the data erasure operation (e.g., a jumper switch, jumper pin, DIP switch, toggle switch, or any other suitable switching device that may be configured by a user such that a position of the switching device is maintained (i.e., "remembered") after being configured. While the switching device is maintained in this position, the disk drive 100 is instructed to execute the data erasure operation). In response to the operation of the data erasure switch 13 by a user, the data erasure switch 13 generates an erasure instruction signal ES for designating an operation mode of the disk drive to be an erasure mode for executing the data erasure operation. Once the erasure switch 13 has been operated (for example, once a jumper switch or jumper pin has been configured by the user), the operation mode of the disk drive will remain in the erasure mode until the configuration of the erasure switch 13 is changed, i.e., the operation mode of the disk drive is maintained.

When the erasure mode is designated, the CPU 10 assumes the erasure mode and executes the data erasure program 110. In the erasure mode, the data erasure operation for erasing all data recorded on the disk 1 is automatically executed without any control of the host system 20.

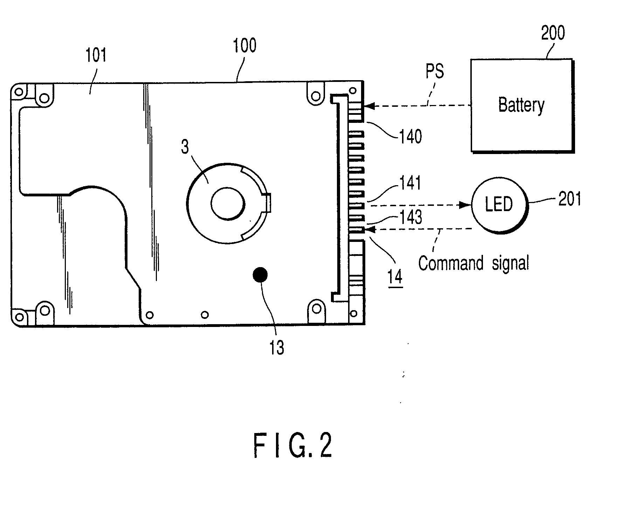

FIG. 2 is a view illustrating the outward appearance of the disk drive 100, according to embodiments of the present invention.

The data erasure switch 13 is provided on the bottom of the housing of the disk drive 100, i.e., on the reverse surface 101 of the base unit, so that a user can operate it.

An interface connector 14 to be connected to the host system 20 is provided at an end of the housing of the disk drive 100. The connector 14 has a power supply pin 140 as well as various signal pins. When the disk drive 100 is connected to the host system 20, the disk drive 100 is supplied with power from the host system 20 via the power supply pin 140.

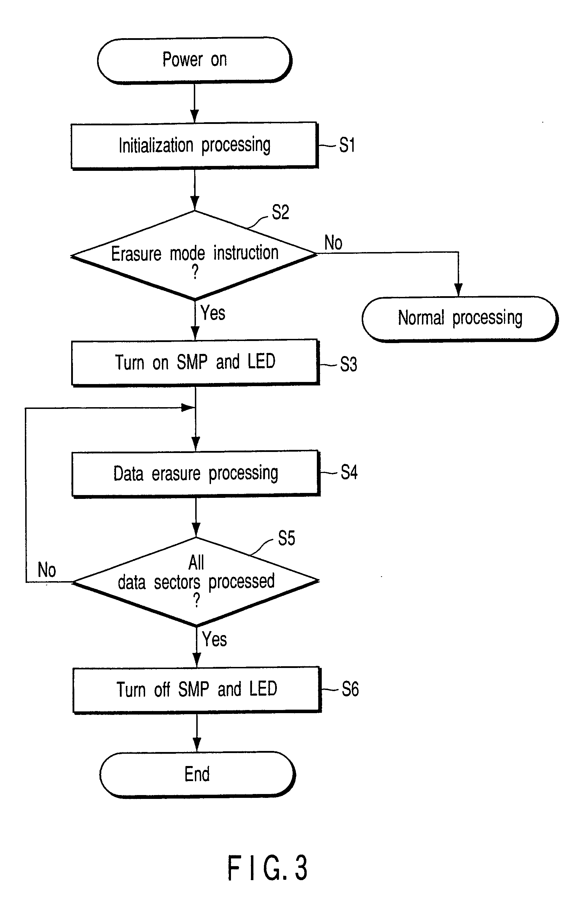

Referring to FIGS. 2 and 3, the data erasure function of the disk drive 100, according to embodiments of the present invention, will be described.

Usually, the disk drive 100 is used housed in the main unit of the host system 20 such as a personal computer. Suppose here, for example, that the disk drive 100 will be disposed of.

Firstly, the disk drive 100 is detached from the main unit of the host system 20. In this state, an external power supply such as a battery 200 (or an AC adapter (not shown)) is connected to the power supply pin 140 of the disk drive 100, thereby supplying the disk drive 100 with power (PS) for driving it. Further, an indicator 201 formed of, for example, a light emitting diode ("LED") used to indicate the start of data erasure processing can be connected to a predetermined signal output pin 141 of the connector 14. The CPU 10 outputs a control signal for lighting the indicator 201 via the output terminal 141, while the data erasure operation is executed.

The flowchart of FIG. 3 illustrates a procedure for the data erasure operation, according to embodiments of the present invention.

When the battery 200 is connected to power supply pin 140 of the disk drive 100, the disk drive 100 is powered on. The CPU 10 executes initialization processing for various types of preparation processing necessary to activate the disk drive 100 (step S1). After that, the CPU 10 determines whether or not an instruction to enter the erasure mode has been issued (i.e., whether or not erasure switch 13 has been operated) (step S2).

In this state, if a user has operated the data erasure switch 13 of the disk drive 100, the switch 13 generates the erasure instruction signal ES. Upon generation of the erasure instruction signal ES, the CPU 10 determines that an instruction to enter the erasure mode has been issued (the answer at step S2 is YES). On the other hand, if the erasure instruction signal ES is not generated, the CPU 10 enters into a normal operation mode. Thus, the CPU 10 determines whether or not the switch 13 is operated when the disk drive 100 is powered on through use of the battery 200 or other power source and assumes the normal operation mode or the erasure mode in accordance with the determination result.

In the normal operation mode, the CPU 10 executes a data writing operation and a data reading operation in accordance with commands from the host system 20, (i.e., if the disk drive 100 is still attached to the main unit of the host system 20).

On the other hand, in the erasure mode, the CPU 10 executes the data erasure program 110, thereby executing the following processing independently of the host system 20.

First, the CPU 10 starts preparation processing for executing the data erasure operation (step S3). Specifically, at the step S3, the CPU 10 drives the spindle motor (SPM) 3 via the SPM driver 61 to rotate the disk 1. Further, the CPU 10 outputs a control signal for controlling the indicator 201 via the output pin 141 of the connector 14, thereby lighting the indicator 201. From the lighting of the indicator 201, the user can recognize that the data erasure function of the disk drive 100 has been validated.

The CPU 10 drives the actuator 4 via the VCM driver 60, thereby starting the data erasure processing for erasing all data recorded on the data region of the disk 1 (i.e., all user data including data and programs, such as the operating system and application programs) (step S4). In one embodiment, during the data erasure processing, the CPU 10 may execute a write operation (over-writing) for sequentially writing random data patterns to all data sectors on the data region of the disk 1, using the R/W channel 8 and magnetic head 2. As a result, data recorded on all the data sectors of the disk 1 is reliably erased. In other words, according to embodiments of the present invention, in the data erasure processing, data on all the data sectors of the disk 1 is replaced with meaningless data, which means that the original user data is reliably and securely erased. The original user data can no longer be restored.

According to other embodiments of the present invention, during the data erasure processing, formatting processing for executing physical format processing may be executed instead of writing random data patterns. This processing also makes it difficult to restore the previous user data.

Servo data necessary for servo control (head positioning control) is also recorded on the data region of the disk 1. Specifically, the data region of the disk 1 comprises a plurality of data sectors for storing user data, and a plurality of servo sectors storing servo data used for positioning the magnetic head 2. According to embodiments of the present invention, the servo data is excluded from the to-be-erased targets, (i.e., the servo data is preserved on the disk 1). Thus, during the data erasure processing, random data patterns are written to the data sectors, while no such writing is executed on the servo sectors.

Accordingly, the servo data on the disk 1 is maintained unchanged. Therefore, even after the execution of the data erasure processing, the disk drive 100 can again be used as a storage device for the host system 20 or another system only if the disk 1 of the disk drive 100 is formatted.

After the erasure of the data recorded on all the data sectors of the disk 1 is completed (if the answer at a step S5 is YES), the CPU 10 stops the operation of the disk drive 100 (step S6). Specifically, the CPU 10 stops the rotation of the spindle motor (SPM) 3 via the SPM driver 61, and switches off the indicator 201. From the switching off of the indicator 201, the user recognizes that the data erasure processing of the disk drive 100 is completed.

As described above, if power is externally supplied and the data erasure switch 13 has been operated (i.e., configured), the disk drive 100 will automatically execute the data erasure processing. Consequently, the disk drive 100 itself can erase the data recorded on the disk 1, without requiring a special working environment such as a host system or a medium that stores the data erasure program.

Although the above-described embodiment employs the indicator 201 to enable a user to recognize the start and completion of the data erasure processing, the indicator 201 is not an essential element. In other embodiments, if a processing time period required for erasing data on all the data sectors is premeasured, the user can recognize the completion of the data erasure processing simply by measuring the time period elapsing from the start of data erasure processing. Thus, for example, if the switch 13 has been operated (i.e., configured), the user may mark the beginning of data erasure processing as the point in time when power is applied to the disk drive.

Moreover, although the disk drive of the embodiment is assumed to be a hard disk drive, it may be another type of disk drive such as, but not limited to, a rewritable optical disk drive. In the case of a hard disk drive that does not record servo data, it may be necessary, of course, to execute a process for erasing all data recorded on the disk (the process may include format processing and/or random-pattern-writing processing).

In addition, it is preferable to employ the above-described structure in which the switch 13 is provided on the housing of the disk drive 100. However, the erasure instruction signal ES designating the erasure mode may be provided to the CPU 10, in response to a dedicated signal or command input from outside the disk drive 100 via a predetermined pin or pins of the connector 14. As an example, the dedicated command signal may be input to a predetermined signal input pin 143 of the connector 14, as shown in FIG. 2.

Furthermore, in one embodiment, instead of the user configuring a switch, the erasure mode may be configured by the user by setting an erasure status indicator in a memory, for example memory 11. The erasure status indicator may be, for example, a status bit or status word stored in an address location of the memory. The CPU 10 may check the erasure status indicator and may execute a data erasure program stored in the memory for erasing the data when the erasure status indicator indicates an erasure mode of the CPU 10.

## Claims

1. A recording and regeneration apparatus, **characterized by** comprising:
a disk medium (1) on which data is recorded;
a switch (13) operable for generating an erasure instruction;
a memory (11); and
a processor (10) for executing a data erasure program permanently stored in the memory (11) for erasing data recorded on the disk medium (1) when the erasure instruction is generated.

2. The recording and regeneration apparatus according to claim 1, **characterized in that** the on-board processor (10) determines whether or not the erasure instruction is generated upon application of power to the recording and regeneration apparatus.

3. The recording and regeneration apparatus according to claim 1, **characterized in that** the switch (13) is at least one of a jumper switch, a jumper pin, a DIP switch and a toggle switch.

4. A method of erasing data recorded on a disk medium (1) in a recording and regeneration apparatus, **characterized by** comprising:
providing a switching means (13) which generates an erasure instruction when the switching means (13) is operated;
providing a memory (11); and
providing control means (10) for executing, when the erasure instruction is generated, a computer program stored in the memory (11), the computer program providing data erasure processing to erase data recorded on the disk medium (1).

5. The method according to claim 4, **characterized in that** the erasure instruction designates an erasure mode of the control means (10).

6. The method according to claim 4, **characterized in that** the control means (10) determines whether or not the erasure instruction is generated upon application of power to the recording and regeneration apparatus.

7. The method according to claim 4, **characterized in that** the switching means (13) comprises at least one of a jumper switch, a jumper pin, a DIP switch and a toggle switch.

8. The method according to claim 4, **characterized in that** the control means (10) assumes one of a normal operation mode when the erasure instruction is not generated and an erasure mode when the erasure instruction is generated, the control means (10) executing, in the normal operation mode, at least one of writing of data to the disk medium (1) and reading of data from the disk medium (1) in accordance with a command from a host system, and the means (10) executing, in the erasure mode, the data erasure processing.

9. The method according to claim 4, **characterized by** further comprising providing means (201) for indicating whether the data erasure processing is executed.

10. The method according to claim 9, **characterized in that** the indicating means (201) comprises a light emitting diode.

11. The method according to claim 4, **characterized in that** a surface of the disk medium (1) has a data region which records data, the data region including a plurality of data sectors which store user data, and a plurality of servo sectors which store servo data, and wherein the control means (10) includes means for erasing the user data of all the data sectors, while preserving the servo data on the disk medium (1).
